# EUROPÄISCHE PATENTSCHRIFT

(11) **EP 1 083 393 B1**
(45) Veröffentlichungstag und Bekanntmachung des Hinweises auf die Patenterteilung: **14.04.2004**
(21) Anmeldenummer: 00117602.3
(22) Anmeldetag: 16.08.2000
(51) Int. Cl.: F24H 1/00, F02G 1/043, F02G 5/02

(54) **Heizsystem zur Wärme- und Stromerzeugung**
Heating system for producing heat and electricity
Système de chauffage pour la production de chaleur et de courant

(30) Priorität: 11.09.1999 DE 19943613
(43) Veröffentlichungstag der Anmeldung: 14.03.2001
(73) Patentinhaber: ROBERT BOSCH GMBH, 70442 Stuttgart (DE)
(72) Erfinder: Wu, Datong, 75181 Pforzheim (DE); Frieling, Thomas-Eckart, 70374 Stuttgart (DE); Zimmermann, Hans-Werner, Dr., 73274 Notzingen (DE); Schall, Andreas, 73054 Eislingen (DE)

(56) Entgegenhaltungen:
- EP-A- 0 445 510
- EP-A- 0 582 109
- WO-A-99/40310

## Beschreibung

Die Erfindung betrifft ein Heizsystem zur Wärme- und Stromerzeugung, das zur Energieversorgung von Häusern einsetzbar ist.

### Stand der Technik

Zur Energieversorgung von Häusern werden in der Regel Heizkessel zur Erwärmung des Wasserkreislaufes der Heizungs- und Brauchwasseranlage eingesetzt. Als hauseigene Stromerzeuger werden bisher meistens Solaranlagen installiert, die jedoch eine geringere Effektivität besitzen.

Es sind auch Stromerzeuger im Einsatz, die mit Gas-Otto-Motoren angetrieben werden. Dabei geht die überschüssige Wärme der Verbrennung meistens verloren. Auch Stromerzeuger mit Stirlingmotor-Antriebe sind Stand der Technik. Es sind auch Wärmezellen mit einem Brenner bekannt, mit denen Wasser aufgeheizt wird und in einem Warmwasserkreislauf abgenommen werden kann. Bei großen Anlagen können auch zwei Brenner in voneinander getrennten Brennkammern vorgesehen sein.

Dokument EP-0 445 510 A2, das als nächstliegender Stand der Technik angesehen wird, offenbart eine Heizungs- und Stromerzeugungsanlage mit einem Brenner und einem von demselben Brenner beheizbaren Stirlingmotor.

Es ist Aufgabe der Erfindung, ein Heizsystem zur Wärme- und Stromerzeugung zu schaffen, das im Aufbau kompakt ist und bei der die überschüssige Wärme der Verbrennung sinnvoll genutzt wird.

### Vorteile der Erfindung

Das kompakte Heizsystem nach der Erfindung weist in einer einzigen Wärmezelle zwei Brenner auf, von denen der erste Brenner zur Stromerzeugung einen thermisch-elektrischen Energie-Wandler betreibt und einen Teil der anfallenden Wärme zum Erwärmen eines Wasserkreislaufes einer Heizungsanlage und/oder eines Warmwasserspeichers abgibt und von denen der zweite Brenner in Abhängigkeit des Heizwärmebedarfes des Wasserkreislaufes der Heizungsanlage und/oder des Warmwasserspeichers betreibbar ist.

Bei diesem Aufbau und Betrieb des Heizsystems sind beide Brenner in die gemeinsame Wärmezelle integriert, in der die Wärme der Abgase effektiv genutzt werden kann. Die überschüssige Wärme wird dem Wasserkreislauf der Heizungsanlage und/oder dem Warmwasserspeicher zugeführt. Da der erste Brenner zur Stromerzeugung vorzugsweise im Dauerbetrieb betrieben wird, muss seine Leistung begrenzt sein. Zweckmäßigerweise wird die Leistung auf z.B. 3 KW begrenzt, die durch die Speicherkapazität des Wasserkreislaufes der Heizungsanlage und/oder des Warmwasserspeichers vorgegeben ist. Auf diese Weise liefert der erste Brenner auch einen Teil des Heizwärmebedarfes, während der zweite Brenner den restlichen Heizwärmebedarf in Abhängigkeit von dem erforderlichen Heizwärmebedarf im "modulierten" Betrieb liefert.

Als thermisch-elektrischer Energie-Wandler wird mit Vorteil ein Stirlingmotor mit Linear-Generator verwendet, dessen Erhitzerkopf von einem als Innenzylinder-Brenner ausgebildeten ersten Brenner umschlossen und aufheizbar ist.

Nach einer besonders vorteilhaften Ausgestaltung ist vorgesehen, dass der Wasserkreislauf der Heizungsanlage und/oder des Warmwasserspeichers zur Kühlung des thermisch-elektrischen Energie-Wandlers verwendet und zusätzlich über einen Wärmeübertrager geführt ist, der von den Abgasen beider Brenner durchströmt wird. Damit wird auch die bei der Kühlung des heißen Teils des thermisch-elektrischen Energie-Wandlers freiwerdende Wärme sinnvoll zur Erwärmung des Wasserkreislaufes verwendet.

Der Aufbau ist nach einer weiteren Ausgestaltung besonders kompakt, wenn vorgesehen ist, dass die beiden Brenner auf einer Ebene nebeneinander in der Wärmezelle mit ovalem oder rechteckförmigem Querschnitt angeordnet sind.

Der Einbau des thermisch-elektrischen Wandlers in die Wärmezelle ist nach einer Ausgestaltung so gelöst, dass der thermisch-elektrische Energie-Wandler mit dem heißen Teil des Stirlingmotors, d.h. dem Erhitzerkopf in die Wärmezelle ragt und dass der kalte Teil des Stirlingmotors außerhalb der Wärmezelle angeordnet und mit seinem Kühlkreis in den Wasserkreislauf der Heizungsanlage und/oder des Warmwasserspeichers einbezogen ist.

Nach einer Weiterbildung ist zusätzlich vorgesehen, dass das hülsenförmige Wärmezellengehäuse als Wärmetauscher (gekühlte Brennkammer) ausgebildet ist und vom Wasserkreislauf der Heizungsanlage und/oder des Warmwasserspeichers durchflossen ist, und dass der Wärmeübertrager das Wärmezellengehäuse auf der den Brennern abgekehrten Seite abschließt, um den Wirkungsgrad des Heizsystems noch zu verbessern.

### Zeichnung

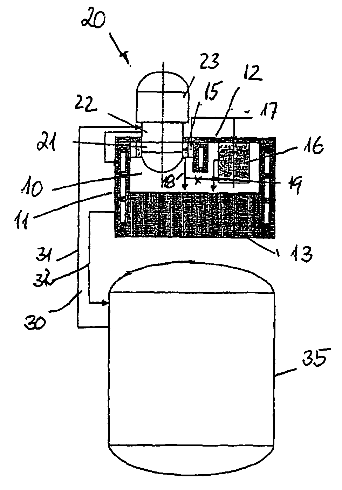

Die Erfindung wird anhand eines in der Zeichnung dargestellten Ausführungsbeispiels eines Heizsystems mit Warmwasserspeicher näher erläutert.

### Ausführungsbeispiel

In der Zeichnung ist eine im Querschnitt ovale oder rechteckförmige Wärmezelle 10 im Schnitt dargestellt, die von einem Deckel 12, einem hülsenförmigen Wärmezellengehäuse 11 und einem Wärmeübertrager 13 umschlossen ist, wobei in dem an den Deckel 12 anschließenden Bereich ein Teil des Wärmezellengehäuses 11 die beiden in der Wärmezelle 10 untergebrachten Brenner 15 und 16 teilweise entkoppelt. Als thermisch-elektrischer Energie-Wandler 20 ist ein Stirlingmotor 22 mit Lineargenerator 23 verwendet, der mit seinem Erhitzerkopf 21 in die Wärmezelle 10 ragt und von einem als einstufiger Innenzylinder-Brenner ausgebildeten ersten Brenner 15 umschlossen ist und betrieben wird. Dabei ist die Zufuhr 17 des Brennstoff-Luftgemisches so, dass der thermisch-elektrische Energie-Wandler 20 mit begrenzter Leistung betrieben wird. Die Leistung muss begrenzt werden, da ein Teil der Wärme des ersten Brenners 15 zum Erwärmen des Wasserkreislaufes 30 der Heizungsanlage oder wie im Ausführungsbeispiel zum Erwärmen des Warmwasserspeichers 35 verwendet wird und die Speicherkapazität des Wasserkreislaufes 30 nicht unbegrenzt ist. Aus Gründen hoher Laufzeiten für den thermisch-elektrischen Energie-Wandlers wird durch die Speicherkapazität des Wasserkreislaufes 30 die Leistung des ersten Brenners 15 gering, z.B. auf 3 KW begrenzt. Dabei kann der erste Brenner 15 sowohl mit konstanter als auch mit variabler begrenzter Leistung betrieben werden.

Der zu kühlende Teil 22 des thermisch-elektrischen Energie-Wandlers 20 und der Lineargenerator 23 sind außerhalb der Wärmezelle 10 angeordnet, wobei der Kühlkreislauf des Teils 22 in den Wasserkreislauf 30 einbezogen ist, wie die ankommende Leitung 31 des Wasserkreislaufes 30 erkennen läßt. Auch das Wärmezellengehäuse 11 ist als Wärmetauscher ausgebildet, dessen Kreis ebenfalls in den Wasserkreislauf 30 einbezogen ist.

Das Brennstoff-Luftgemisch 17 wird auch dem zweiten Brenner 16 zugeführt, jedoch wird dieser nicht im Dauerbetrieb betrieben, sondern in Abhängigkeit von dem Heizwärmebedarf des Warmwasserspeichers 35 von Fall zu Fall, d.h. "modulierend".

Wie die Pfeile 18 und 19 zeigen, werden die Abgase beider Brenner 15 und 16 über einen Wärmeübertrager 13 geleitet, um die darin enthaltene Wärme auf den über diesen Wärmeübertrager 13 geführten Wasserkreislauf 30 zu übertragen. Dieser Wärmeübertrager 13 schließt auf der den Brennern 15 und 16 abgekehrten Seite die Wärmezelle 10 ab. Es ist daraus deutlich ableitbar, dass der erste Brenner 15 neben der Stromerzeugung auch einen Teil des Heizwärmebedarfes deckt, während der zweite Brenner 16 in Funktion tritt, wenn mehr Heizwärmebedarf auftritt.

Anstelle des Warmwasserspeichers 35 kann der Wasserkreislauf 30 auch über die Heizkörper einer Heizungsanlage oder auch über beide Wärmeverbraucher geführt werden.

Es bleibt noch zu erwähnen, dass anstelle eines Stirlingmotors mit Lineargenerator auch andere thermisch-elektrische Energie-Wandler entsprechend in die gemeinsame Wärmezelle integriert und von einem Brenner in gleicher Weise betrieben werden können.

## Patentansprüche

1. Heizsystem zur Wärme- und Stromerzeugung mit zwei Brennern (15, 16) in einer einzigen Wärmezelle (10), bei dem der erste Brenner (15) zur Stromerzeugung einen thermisch-elektrischen Energie-Wandler (20) betreibt und einen Teil (18) der anfallenden Wärme zum Erwärmen eines Wasserkreislaufes (30) einer Heizungsanlage und/oder eines Warmwasserspeichers (35) abgibt und bei dem der zweite Brenner (16) in Abhängigkeit vom Heizwärmebedarf des Wasserkreislaufes (30) der Heizungsanlage und/oder des Warmwasserspeichers (35) betreibbar ist.

2. Heizsystem nach Anspruch 1, **dadurch gekennzeichnet, dass** als thermisch-elektrischer Energie-Wandler (20) ein Stirlingmotor (22) mit Lineargenerator (23) einsetzbar ist.

3. Heizsystem nach Anspruch 1 oder 2, **dadurch gekennzeichnet, dass**, der thermisch-elektrischer Energie-Wandler (20) einen Erhitzerkopf (21) aufweist, der von dem ersten Brenner (15) im Wesentlichen umschlossen und aufheizbar ist.

4. Heizsystem nach Anspruch 3, **dadurch gekennzeichnet, dass** der erste Brenner (15) als einstufiger Innenzylinder-Brenner ausgebildet ist.

5. Heizsystem nach Anspruch 1, **dadurch gekennzeichnet, dass** die Leistung des ersten Brenners (15) durch die Speicherkapazität des Wasserkreislaufes (30) der Heizungsanlage und/oder des Warmwasserspeichers (35) begrenzt ist.

6. Heizsystem nach Anspruch 1, **dadurch gekennzeichnet, dass** der Wasserkreislauf (30) der Heizungsanlage und/oder des Warmwasserspeichers (35) zur Kühlung des thermisch-elektrischen Energie-Wandlers (20) verwendet und zusätzlich über einen Wärmeübertrager (13) geführt ist, der von den Abgasen (18, 19) beider Brenner (15, 16) durchströmt wird.

7. Heizsystem nach Anspruch 1, **dadurch gekennzeichnet, dass** die beiden Brenner (15, 16) auf einer Ebene nebeneinander in der Wärmezelle (10) mit ovalem oder rechteckförmigem Querschnitt angeordnet sind.

8. Heizsystem nach Anspruch 1, **dadurch gekennzeichnet, dass** der erste Brenner (15) im Dauerbetrieb betreibbar ist.

9. Heizsystem nach einem der vorhergehenden Ansprüche, **dadurch gekennzeichnet, dass** der thermisch-elektrische Energie-Wandler (20) mit dem heißen Teil des Stirlingmotors, d.h. mit dem Erhitzerkopf (21) in die Wärmezelle (10) ragt und dass der kalte Teil des Stirlingmotors (22) außerhalb der Wärmezelle (10) angeordnet und mit seinem Kühlkreis in den Wasserkreislauf (30) der Heizungsanlage und/oder des Warmwasserspeichers (35) einbezogen ist.

10. Heizsystem nach einem der vorhergehenden Ansprüche, **dadurch gekennzeichnet, dass** das hülsenförmige Wärmezellengehäuse (11) als Wärmetauscher ausgebildet ist und vom Wasserkreislaus (30) der Heizungsanlage und/oder des Warmwasserspeichers (35) durchflossen ist, und dass der Wärmeübertrager (13) das Wärmezellengehäuse (11) auf der den Brennern (15, 16) abgekehrten Seite abschließt.

## Claims

1. Heating system for heat and current generation, with two burners (15, 16) in a single heat cell (10), in which heating system the first burner (15) operates a thermoelectric energy converter (20) for current generation and discharges part (18) of the heat that arises in order to heat a water circuit (30) of a heating installation and/or a hot-water store (35), and in which heating system the second burner (16) can be operated as a function of the heating-heat requirement of the water circuit (30) of the heating installation and/or of the hot-water store (35).

2. Heating system according to Claim 1, **characterized in that** a Stirling engine (22) with a linear generator (23) can be used as a thermoelectric energy converter (20).

3. Heating system according to Claim 1 or 2, **characterized in that** the thermoelectric energy converter (20) has a heater head (21) which is essentially surrounded by and can be heated by the first burner (15).

4. Heating system according to Claim 3, **characterized in that** the first burner (15) is designed as a single-stage inner-cylinder burner.

5. Heating system according to Claim 1, **characterized in that** the power of the first burner (15) is limited by the storage capacity of the water circuit (30) of the heating installation and/or of the hot-water store (35).

6. Heating system according to Claim 1, **characterized in that** the water circuit (30) of the heating installation and/or of the hot-water store (35) is used for cooling the thermoelectric energy converter (20) and is additionally led via a heat exchanger (13), through which the exhaust gases (18, 19) from both burners (15, 16) flow.

7. Heating system according to Claim 1, **characterized in that** the two burners (15, 16) are arranged next to one another on one plane in the heat cell (10) having an oval or rectangular cross section.

8. Heating system according to Claim 1, **characterized in that** the first burner (15) can be operated in the continuous operating mode.

9. Heating system according to one of the preceding claims, **characterized in that** the thermoelectric energy converter (20) projects with the hot part of the Stirling engine, that is to say with the heater head (21), into the heat cell (10), and **in that** the cold part of the Stirling engine (22) is arranged outside the heat cell (10) and is incorporated with its cooling circuit into the water circuit (30) of the heating installation and/or of the hot-water store (35).

10. Heating system according to one of the preceding claims, **characterized in that** the sleeve-shaped heat-cell housing (11) is designed as a heat exchanger and has flowing through it the water circuit (30) of the heating installation and/or of the hot-water store (35), and **in that** the heat exchanger (13) closes off the heat-cell housing (11) on the side facing away from the burners (15, 16).

## Revendications

1. Système de chauffage pour la production de chaleur et de courant avec deux brûleurs (15, 16) dans une cellule de chaleur unique (10), dans lequel le premier brûleur (15) de production de courant actionne un transformateur d'énergie thermoélectrique (20) et émet une partie (18) de la chaleur produite pour chauffer un circuit d'eau (30) d'une installation de chauffage et/ou d'un accumulateur d'eau chaude (35), et dans lequel le deuxième brûleur (16) peut être actionné en fonction du besoin de chaleur de chauffage du circuit d'eau (30) de l'installation de chauffage et/ou de l'accumulateur d'eau chaude (35).

2. Système de chauffage selon la revendication 1,
**caractérisé en ce que**
le transformateur d'énergie thermoélectrique (20) utilisé peut être un moteur Stirling (22) à générateur linéaire (23).

3. Système de chauffage selon la revendication 1 ou 2,
**caractérisé en ce que**
le transformateur d'énergie thermoélectrique (20) présente une tête de chauffage (21) essentiellement entourée et qui peut être chauffée par le premier brûleur (15).

4. Système de chauffage selon la revendication 3,
**caractérisé en ce que**
le premier brûleur (15) est conçu comme un brûleur à cylindre intérieur monoétagé.

5. Système de chauffage selon la revendication 1,
**caractérisé en ce que**
la puissance du premier brûleur (15) est limitée par la capacité de stockage du circuit d'eau (30) de l'installation de chauffage et/ou de l'accumulateur d'eau chaude (35).

6. Système de chauffage selon la revendication 1,
**caractérisé en ce que**
pour le refroidissement du transformateur d'énergie thermoélectrique (20), le circuit d'eau (30) de l'installation de chauffage et/ou de l'accumulateur d'eau chaude (35) est utilisé et de plus passe par un échangeur de chaleur (13) traversé par les gaz d'échappement (18, 19) des deux brûleurs (15, 16).

7. Système de chauffage selon la revendication 1,
**caractérisé en ce que**
les deux brûleurs (15, 16) sont disposés sur un plan l'un à côté de l'autre dans la cellule de chaleur (10) à section ovale ou rectangulaire.

8. Système de chauffage selon la revendication 1,
**caractérisé en ce que**
le premier brûleur (15) peut fonctionner en mode continu.

9. Système de chauffage selon une des revendications précédentes,
**caractérisé en ce que**
le transformateur d'énergie thermoélectrique (20) pénètre avec la partie chaude du moteur Stirling, c'est dire avec la tête de chauffage (21), dans la cellule de chaleur (10), et la partie froide du moteur Stirling (22) est placée à l'extérieur de la cellule de chaleur (10) et insérée avec son circuit de refroidissement dans le circuit d'eau (30) de l'installation de chauffage et/ou de l'accumulateur d'eau chaude (35).

10. Système de chauffage selon une des revendications précédentes,
**caractérisé en ce que**
l'enveloppe en forme de manchon (11) de la cellule de chaleur est conçue comme un échangeur de chaleur et est traversée par le circuit d'eau (30) de l'installation de chauffage et/ou de l'accumulateur d'eau chaude (35), et l'échangeur de chaleur (13) obture l'enveloppe de la cellule de chaleur (11) du côté opposé aux brûleurs (15, 16).
